Europäisches Patentamt

European Patent Office

Office européen des brevets

(11) Veröffentlichungsnummer: **0 436 128 B1**

(12) **EUROPÄISCHE PATENTSCHRIFT**

(45) Veröffentlichungstag der Patentschrift: **08.03.95**

(51) Int. Cl.6: **B01D 71/38**, B01D 69/12, B01D 61/36

(21) Anmeldenummer: **90123133.2**

(22) Anmeldetag: **03.12.90**

---

(54) **Composite-Membran zur Abtrennung von Wasser aus organische Komponenten enthaltenden Fluiden.**

---

(30) Priorität: **01.12.89 DE 3939867**
**01.12.89 DE 3939841**

(43) Veröffentlichungstag der Anmeldung:
**10.07.91 Patentblatt 91/28**

(45) Bekanntmachung des Hinweises auf die Patenterteilung:
**08.03.95 Patentblatt 95/10**

(84) Benannte Vertragsstaaten:
**AT BE CH DE DK ES FR GB GR IT LI LU NL SE**

(56) Entgegenhaltungen:
**EP-A- 0 096 339**
**US-A- 4 802 988**

**PATENT ABSTRACTS OF JAPAN, Band 6, Nr. 24 (C-91)[902], 12. Februar 1982;& JP-A-56 147 604 (NITTO DENKI) 16-11-1981**

**PATENT ABSTRACTS OF JAPAN, Band 3, Nr. 114 (C-59), 21. September 1979;& JP-A-54 95 982 (NITTO DENKI) 28-07-1979**

(73) Patentinhaber: **Deutsche Carbone AG**
**Talstrasse 112**
**Postfach 56 02 09**
**D-60407 Frankfurt (DE)**

(72) Erfinder: **Neel, Jean Maurice Léon**
**24, Avenue du Chateau**
**F-54600 Villers-Lés-Nancy (FR)**
Erfinder: **Nguyen, Ouang Trong**
**232, Rue E. Goncourt**
**F-54710 Ludres (FR)**
Erfinder: **Brüschke, Hartmut, Dr.**
**Kurpfalzstrasse 64**
**W-6907 Nussloch (DE)**

(74) Vertreter: **Dost, Wolfgang, Dr.rer.nat., Dipl.-Chem. et al**
**Patent- und Rechtsanwälte**
**Bardehle . Pagenberg . Dost . Altenburg . Frohwitter . Geissler & Partner**
**Postfach 86**
**06 20**
**D-81633 München (DE)**

---

PATENT ABSTRACTS OF JAPAN, Band 7, Nr. 197 (M-239)[1342], 27. August 1983;& JP-A-58 96 594 (RICOH K.K.) 08-06-1983

**Beschreibung**

Die Erfindung betrifft eine Composite-Membran zur Abtrennung von Wasser aus organische Komponenten enthaltenden fluiden Gemischen mittels Pervaporation oder Dampfpermeation sowie die Verwendung der genannten Composite-Membran in Pervaporationsverfahren.

Es ist bekannt, daß Wasser aus fluiden Gemischen, die organische Komponenten enthalten, durch verschiedene Verfahren abgetrennt werden kann. Ein solches konventionelles Verfahren, das besonders zur Entwässerung von Flüssigkeiten angewandt wird, ist das Destillationsverfahren, bei dem eine Auftrennung entsprechend der Flüchtigkeit der Komponenten erfolgt. Hierzu werden Destillationskolonnen mit Einbauten, Pumpen, Wärmetauschern zur Aufheizung und Kondensation, etc. benötigt die einen beträchtlichen Kapitaleinsatz erfordern. Darüber hinaus erfordern Destillationsverfahren einen großen Aufwand an Meß- und Regeltechnik, da Destillationskolonnen nur in einem engen Lastbereich betrieben werden können.

Soll aus einem fluiden Gemisch, in dem Wasser die höher siedende Komponente ist, eine nur geringe Menge Wasser nach einem Destillationsverfahren abgetrennt werden, so ist der gesamte übrige , nicht-wässrige Anteil zu verdampfen und am Kopf der Destillationskolonne zu kondensieren. Je nach Ausbildung der Destillationskurven (Dampf-Flüssigkeitsgleichgewichte) kann es erforderlich sein, den gesamten nicht-wässrigen Anteil mehrfach zu verdampfen, um die gewünschte Trennung zu erreichen. Der hierfür erforderliche Energieeinsatz verursacht beträchtliche Kosten.

Sieden die nicht-wässrigen Komponenten des Gemisches bei einer höheren Temperatur als der Siedetemperatur von Wasser, so muß im Prinzip nur das Wasser verdampft und am Kopf der Kolonne kondensiert werden. Der gesamte, nicht-wässrige Anteil muß aber auf jeden Fall bis zu seinem Siedepunkt erhitzt werden, was zu unerwünschten thermischen Belastungen bis zur Zersetzung von organischen Komponenten führen kann. Wegen der hohen Verdampfungsenthalpie des Wassers und der Notwendigkeit, die Destillationskolonne mit einem endlichen Rücklaufverhältnis zu betreiben, kann auch in diesem Fall der Energieeinsatz beträchtlich sein.

Zunehmend strengere Anforderungen des Umweltschutzes machen es in beiden geschilderten Fällen erforderlich, möglichst so reines Wasser abzutrennen, daß dieses ohne weitere Nachbehandlung verworfen, d.h. in die natürlichen Gewässer eingeleitet werden kann. Diese notwendige Reinheit des abgetrennten Wassers erfordert in vielen Fällen einen unverhältnismäßig gesteigerten Einsatz an Apparaten, Meß- und Regeleinrichtungen und Energie bei Destillationsverfahren, um noch geringe Reste an hoch oder niedrig siedenden Komponenten aus dem abgetrennten Wasser zu entfernen.

Enthält das zu trennende Gemisch sowohl organische Komponenten, die einen höheren Siedepunkt, als auch solche, die einen niedrigeren Siedepunkt als Wasser aufweisen, so ist eine Entfernung des Wassers durch einfache Destillation nicht möglich. Vielmehr ist eine mehrstufige wiederholte Destillation erforderlich, verbunden mit einem gesteigerten Kapital- und Energieeinsatz.

Viele Gemische organischer Flüssigkeiten mit Wasser zeigen bei bestimmten Zusammensetzungen azeotrope Punkte, an denen die Flüssigkeit die gleiche Zusammensetzung wie der mit ihr im Gleichgewicht stehende Dampf aufweist. Solche Gemische können nicht durch normale Destillation, sondern nur durch komplizierte Prozesse getrennt werden. Hierbei wird meist eine zusätzliche Substanz zugefügt, durch die das Azeotrop gespalten wird. Diese zusätzliche Substanz muß anschließend aus den beiden Produktströmen wieder vollständig entfernt und zurückgewonnen werden.

Ähnliche Schwierigkeiten wie bei der Destillation ergeben sich auch bei adsorptiver oder absorptiver Entfernung von Wasser aus organische Komponenten enthaltenden Fluiden. Mit ansteigender zu entfernender Wassermenge und mit abnehmender Endkonzentration an Wasser im Produkt steigt die Menge an Adsorptionsmittel stark an, ferner nehmen die Schwierigkeiten bei der Regeneration des Adsorptionsmittels zu.

Ein Verfahren zur Entwässerung von organische Komponenten enthaltenden fluiden Gemischen, das die vorgenannten Nachteile weitgehend vermeidet, ist das Pervaporationsverfahren. Bei diesem Verfahren wird das zu entwässernde Gemisch mit einer Seite (Zulaufseite) einer nichtporösen Membran in Kontakt gebracht, wobei diese Membran eine besonders hohe Permeation für Wasser aufweist, organische Komponenten jedoch nicht oder nur in sehr geringem Maße permeieren läßt. Wird auf der zweiten Seite das chemische Potentials auf der besser permeirenden Komponenten, also des Wassers, genügend weit unter den Wert des chemischen Potentials auf der ersten Seite abgesenkt, so kann Wasser durch die Membran hindurchtreten. Typischerweise erfolgt das Absenken des chemischen Potentials auf der zweiten Seite der Membran durch eine dauernde Erniedrigung des Partialdampfdruckes der bevorzugt permeierenden Komponente. Das durch die Membran hindurchtretende Permeat wird somit in der Dampfform von der zweiten Seite der Membran entfernt, z.B. durch Abpumpen, Kondensieren oder andere geeignete Maßnahmen. An der Zulaufseite der Membran kann hierbei anstelle eines flüssigen Gemisches auch das dampfförmige

3

Gemisch, vorzugsweise als Sattdampf, aufgegeben werden.

In der einschlägigen Literatur sind eine Reihe von Membranen und Membranmaterialien beschrieben, die für Pervaporationsverfahren geeignet sind. Genannt seien hier Polyperfluorsulfonsäure (Cabasso, Liu; J. Memb. Sci. 24, 101 (1985)), sulfoniertes Polyethylen (Cabasso, Korngold, Liu, J. Pol. Sci., Letters, 23, 577 (1985)), Polyacrylnitril (Neel, Aptel, Clement; Desalination 53, 297 (1985)), Cellulosetriacetat (Wentzlaff, Böddeker, Hattenbach; J. Memb. Sci. 22, 333 (1985)), Polymaleimidacrylnitril (Yoshikawa et al; J. Pol. Sci.22, 2159 (1984)) oder Ionentauschermembranen (Wentzlaff, Böddeker, Hattenbach; J. Memb. Sci. 22, 333 (1985)), vernetzter Polyvinylalkohol, (Brüschke, EP-A- 0 096 339), vernetzter Polyvinylalkohol (Bartels, J.Reale; US-A- 4 802 988). Nur die zuletztgenannten Membranen mit Trennschichten aus vernetztem Polyvinylalkohol werden bisher kommerziell genützt.

Die Effizienz einer Pervaporationsmembran wird in erster Linie durch ihre Selektivität und durch ihren spezifischen Fluß bestimmt. Die Selektivität wird meist angegeben als Verhältnis der Konzentration der besser permeierenden Komponente zur Konzentration der schlechter permeierenden Komponente in Permeat, dividiert durch das entsprechende Konzentrationsverhältnis in der zu trennenden Mischung.

$$\alpha = \frac{(c_1/c_2)\,\text{Permeat}}{(c_1/c_2)\,\text{Zulauf}}$$

In der praktischen Anwendung hat sich jedoch gezeigt, daß diese Größe wenig aussagefähig ist. Vielmehr hat es sich als günstiger erwiesen, die Konzentration der besser permeierenden Komponente im Permeat als Funktion der Konzentration der besser permeierenden Komponente im Zulauf in Kurvenform darzustellen. Der transmembrane Fluß ist ebenfalls eine Funktion der Zusammensetzung des Zulaufs. Er wird meist als Permeatmenge pro
Membranfläche und Zeiteinheit, d.h. in $kg/(m^2.h)$ für die besser permeierende Komponente angegeben. Ein weiteres wesentliches Kriterium für die Brauchbarkeit einer Pervaporationsmembran ist ihre chemische und thermische Beständigkeit. Um einen hohen transmembranen Fluß und eine ausreichende Triebkraft zu erreichen, ist es erforderlich, den Pervaporationsprozess bei möglichst hohen Temperaturen zu betreiben Dies bedeutet aber, daß die Membran bei hoher Temperatur in Kontakt mit einer Zulaufmischung steht, die einen hohen Gehalt an organischen Komponenten, z.B. organischen Lösungsmitteln, aufweist. Für eine wirtschaftliche Lebensdauer der Membranen müssen alle in der Membran enthaltene Teile gegen diese aggressiven Bedingungen dauernd beständig sein.

Bei den kommerziell genützten Pervaporationsmembranen handelt es sich um sogenannte Composite-Membranen mit mehrschichtigem Aufbau. Die Membran nach der EP-A-0 096 339 besteht aus :

a) Einer Verstärkungsschicht aus einem Vlies oder einem Gewebe, vorzugsweise aus Polyester, das die nötige mechanische Stabilität und Reißfestigkeit einbringt.

b) Hierauf befindet sich eine mikroporöse Membran mit vorzugsweise asymetrischer Porenstruktur, d.h. mit unterschiedlichem Porendurchmesser über die Dicke der Membran. Als Material für diese mikroporöse Schicht werden Polymere wie Polyacrylnitril, Polysulfon oder hydrolysiertes Celluloseacetat verwendet, von denen bekannt ist, daß sie zur Bildung von mikroporösen Schichten befähigt sind. Die Porengröße dieser Schicht sollte möglichst einheitlich sein.

c) Auf dieser mikroporösen Schicht befindet sich eine porenfreie Trennschicht aus vernetztem Polyvinylalkohol. Der die Trennschicht bildende Polyvinylalkohol ist durch Veresterung, Veretherung oder Acetalisierung oder durch eine Kombination dieser Reaktionen vernetzt. Typische Vernetzungsmittel sind Dicarbonsäuren oder Dicarbonsäurehalogenide zur Bildung von Estern; Dialdehyde und Aldehyde zur Bildung von Acetalen; Dihalogenverbindungen zur Bildung von Ethern, sowie Kombinationen dieser Vernetzungsmittel.

Diese Composite-Membran eignet sich besonders zur Entwässerung von neutralen organischen Lösungsmitteln, wie einfache Alkohole, Ester, Ether oder Ketone, oder Gemische von neutralen organischen Lösungsmitteln, die einen maximalen Wassergehalt von etwa 15 Gew% aufweisen. Der Wassergehalt im entwässertem Endprodukt beträgt 200 ppm oder weniger.

Die in der US-A-4 802 988 beschriebene Pervaporationsmembran weist ebenfalls einen mehrschichtigen Aufbau auf. Als bevorzugte Verstärkungsschicht für die Membran dient ein Vlies aus Polyester. Hierauf ist eine poröse Stützschicht aus Polysulfon oder Polyethersulfon aufgebracht, die eine asymetrische Porenstruktur aufweist. Die eigentliche porenfreie Trennschicht besteht aus vernetztem Polyvinylalkohol.

Zur Bildung dieser porenfreien Trennschicht wird Polyvinylalkohol mit einem aliphatischen Dialdehyd mit mindestens 3 C-Atomen, typischerweise Glutardialdehyd, in Gegenwart von wässriger Schwefelsäure vernetzt. Diese Composite-Membran hat ein besonders hohes Rückhaltevermögen für Ethylenglycol, ist aber für die Entwässerung von Ethanol oder von organischen Lösungsmitteln mit etwa gleichem Molekulargewicht wie Ethanol wegen der geringeren Selektivität weniger geeignet.

Gegenstand der Erfindung ist nun eine Composite-Membran zur Abtrennung von Wasser aus organische Komponenten enthaltenden fluiden Gemischen mittels Pervaporation oder Dampfpermeation, mit einer Trennschicht aus vernetztem Polyvinylalkohol, die dadurch gekennzeichnet ist, daß die vernetzte Polyvinylalkohol-Trennschicht in einem separaten Verfahrensschritt einer zusätzlichen Nachvernetzung durch Einwirkung von Säuren, die über die Dampfphase auf die Polyvinylalkoholschicht einwirken, unterworfen worden ist.

Die Erfindung betrifft ferner ein Verfahren zur Abtrennung von Wasser aus organische Komponenten enthaltenden fluiden Gemischen mittels Pervaporation oder Dampfpermeation, wobei das zur entwässernde fluide Gemisch mit einer Seite einer Composite-Membran in Kontakt gebracht wird, während das chemische Potential des Wassers auf der anderen Seite der Membran auf einem Wert gehalten wird, der niedriger ist als der des chemischen Potentials des Wassers der einen Seite, wobei das Verfahren dadurch gekennzeichnet ist, daß man zu seiner Durchführung die vorgenannte Composite-Membran verwendet.

Die Composite-Membran der Erfindung besitzt eine wesentlich höhere Selektivität als die bekannten Membranen. Die Composite-Membran der Erfindung ermöglicht die Entwässerung nach der Pervaporationsmethode selbst bei sehr hohen Wassergehalten der Fluide, wobei diese Wassergehalte bis 99 Gew% betragen können. Nachfolgend sind die einzelnen Schichten der Composite-Membran der Erfindung im Detail beschrieben:

### Die Polyvinylalkohol-Trennschicht

Die Polyvinylalkohol-Trennschicht bewirkt die Abtrennung von Wasser aus organische Komponenten enthaltenden Fluiden nach dem Pervaporationverfahren. Sie besteht aus einem porenfreien Film aus vernetztem und nachvernetztem Polyvinylalkohol, der eine Dicke von vorzugsweise 0.5 bis 10 $\mu$m; insbesondere 1 bis 4 $\mu$m besitzt. Die Herstellung des Polyvinylalkohols erfolgt z.B. durch Hydrolyse von Polyvinylacetat, wobei der Hydrolysegrad vorzugsweise 50 bis 100%, insbesondere 98 bis 100% beträgt. Der Polyvinylalkohol besitzt ein Molekulargewicht von 20 000 bis 200 000, vorzugsweise 100 000 bis 150 000. Hierbei ist das Molekulargewicht des Polyvinylalkohols vorzugsweise deutlich größer als der "cut-off-value" einer vorhandenen porösen Stützschicht, damit die Polyvinylalkoholmoleküle nicht in die Poren der porösen Stützschicht eindringen.

Die porenfreie Trennschicht wird vorzugsweise gebildet durch Aufbringen einer Lösung von Polyvinylalkohol auf eine poröse Stützschicht. Vorzugsweise werden wässrige Lösungen von Polyvinylalkohol mit einer Konzentration an Polyvinylalkohol von 0,5 Gew% bis zur Löslichkeitsgrenze von Polyvinylalkohol in Wasser verwendet, die vom Hydrolysegrad und Molekulargewicht des Polyvinylalkohols abhängt. Bevorzugt sind Konzentrationen an Polyvinylalkohol von 3 bis 10 Gew%, vorzugsweise 5 bis 8 Gew%.

Der Lösung von Polyvinylalkohol können die zur Vernetzung verwendeten Vernetzungsmittel, z.B. Dicarbonsäuren oder Dicarbonsäurehalogenide, Dialdehyde oder Formalin, Diahlogenverbindungen oder Gemische dieser Vernetzungsmittel zugesetzt werden. Die molare Konzentration der Vernetzungsmittel für die Vernetzung kann sich je nach ihrer Natur, Löslichkeit und Mischung in weitem Bereich bewegen und beträgt vorzugsweise 0,01 bis 1 Mol Vernetzungsmittel je Mol Vinylalkoholmonomeres, insbesondere 0,05 bis 0,3 Mol je Mol Vinylalkohol.

Nach Auftragen der Polyvinylalkohollösung auf die poröse Stützschicht erfolgt die Vernetzung (Vorvernetzung) durch Trocknen unter der Einwirkung des Vernetzungsmittels. Erhöhte Temperaturen zwischen Raumtemperatur und 200°C beschleunigen die Trocknung und Vernetzung. Typischerweise liegt die Temperatur bei 80 bis 180°C, vorzugsweise 100 bis 150°C. Die Vernetzungsdauer beträgt 1 bis 60 min. vorzugsweise 5 bis 30 min. Zugabe von Mineralsäure, wie Schwefelsäure oder Salzsäure, beschleunigt die Vernetzungsreaktion. Die Säure kann direkt zur Polyvinylalkohollösung gegeben werden, die bereits die Vernetzungsmittel enthält. Die Vernetzung erfolgt durch Verethern, Verestern oder Acetalisieren der Hydroxlgruppen des Polyvinolalkohols, wobei diese Reaktionen auch nebeneinander vorliegen können. Geeignete Vernetzungsmittel sind dem Fachmann aus der EP-A-0 096 339 und der US-A-4 802 988 bekannt. Die die Vernetzungsreaktion beschleunigende Säure wird hierin der Polyvinylalkohollösung zugegeben, die auch das Vernetzungs mittel enthält. Als vorteilhaft hat sich in einigen Fällen erwiesen, eine zweite Lösung von Polyvinylalkohol, die Mineralsäure enthält, in einem zweiten Schritt aufzutragen. Hierbei wird zunächst die Vernetzungsmittel enthaltende Lösung auf die poröse Stützschicht aufgetragen und bei 20 bis 100°C, vorzugsweise 50 bis 80°C, während 2 bis 10 min, vorzugsweise 4 bis 5 min getrocknet. Auf den vorgetrockneten Film aus Polyvinylalkohol wird eine zweite Schicht aufgetragen, die aus einer Polyvinylalkohollösung von 2 bis 5 Gew%, vorzugsweise etwa 3,5 Gew%, und Mineralsäure, vorzugsweise Schwefelsäure und/oder Salzsäure, in einem Molverhältnis von 0,0001:1 bis 0,1:1, vorzugsweise etwa 0,01:1 von Säure zu Polyvinylalkoholmonomeren besteht.

Die Nachvernetzung

Die so erhaltene vernetzte (vorvernetzte) Polyvinylalkohol-Trennschicht wird dann (nach dem Trocknen) in einem weiteren Verfahrensschritt einer Nachvernetzung dadurch unterworfen, das man Säuren in der Dampfphase auf die vernetzte (vorvernetzte) Polyvinylalkoholschicht einwirken läßt.

Beispiele für geeigneten Säuren sind Mineralsäuren, wie Halogenwasserstoffsäuren (z.B. Chlorwasserstoffsäure, Bromwasserstoffsäure oder Jodwasserstoffsäure), schweflige Säure, Schwefelsäure, salpetrige Säure oder Salpetersäure, sowie organische Säuren, wie Essigsäure, wobei auch Gemische der vorgenannten Säuren verwendet werden können. Anstelle der Säuren können auch deren Anhydride benutzt werden, insbesondere wenn diese in gasförmiger oder leicht verdampfbarer Form vorliegen. Schließlich können anstelle der Säuren auch säureabspaltende Verbindungen eingesetzt werden, aus denen unter den Reaktionsbedingungen die Säuren in situ entstehen.

Beispiele für geeignete säureabspaltende Verbindungen sind Halogenkohlenwasserstoffe, insbesondere α, ω, -Dihalogenalkane, die vorzugsweise 2-4 Kohlenstoffatome besitzen. Bevorzugte Beispiele sind die Dichlor- Dibrom- und Dijodalkane. Andere Beispiele sind Salze von Säuren, die sich bei höheren Temperaturen unter Säureabspaltung zersetzen, z.B. Ammoniumsalze, wie Ammoniumchlorid. Weitere geeignete Beispiele sind dem Fachmann bekannt.

Die Durchführung der Nachvernetzung kann auf verschiedene Weise erfolgen. In eine bevorzugten Ausführungsform wird die Membran mit der vernetzten (vorvernetzten) Polyvinylalkoholschicht in einen verschließbaren Behälter gebracht, aus dem durch Abpumpen die Luft bis auf einen geringen Rest entfernt wird. Dann wird die Säure in den unter Unterdruck stehenden Behälter eingebracht. Anschließend wird der Behälter, z.B. durch Einbringen in einen Ofen, erhitzt. Die Temperaturen für die Nachvernetzung betragen vorzugsweise 100 bis 230°C insbesondere 130 bis 180°C. Die Nachvernetzungsdauer richtet sich nach dem gewünschten Nachvernetzungsgrad und hängt auch von der Temperatur ab. Vorzugsweise beträgt die Nachvernetzungsdauer 1 bis 12 Stunden, insbesondere 3 bis 8 Stunden. Nach dem Abkühlen wird der Behälter belüftet, worauf die Membran mit der nachvernetzten Polyvinylalkoholschicht entnommen werden kann.

Ist die zur Nachvernetzung verwendete Säure bei Normalbedingungen von Temperatur und Druck, flüssig oder fest, so kann sie auch in einem offenen Gefäß von Anfang an in den Nachvernetzungsbehälter eingebracht werden. Beim Evakuieren und Erhitzen erfolgt dann das Verdampfen der Säure.

Bei der Nachvernetzung kann sich das Mengenverhältnis von Säure zu der Oberfläche der Polyvinylalkoholschicht in weitem Rahmen bewegen. Bereits sehr kleine Säuremengen von z.B. 0,01 oder 0,1 g Säure pro m² Oberfläche der Polyvinylalkoholschicht bewirken einen deutlichen Effekt. Eine eindeutig Obergrenze läßt sich nicht ohne weiteres festlegen. Eine praktische Obergrenze liegt dort, wo sich mit zunehmenden Säureeinsatz keine Verbesserung der Membraneigenschaften bzw. wünschenswerte Reaktionsverkürzung in Relation zum erhöhten Säureeinsatz feststellen läßt. Im Allgemeinen sind Säuremengen von 0,05 bis 1 g Säure/m² Oberfläche der Polyvinylalkoholschicht geeignet. Es wurde gefunden, das bei der Nachvernetzungsreaktion in vielen Fällen die Anwesenheit geringer Sauerstoffmengen einen positiven Einfluß auf den Eigenschaften der nachvernetzten Membran hat. Spektroskopisch kann die Bildung von Etherbrücken, Kohlenstoff-Kohlenstoff-Brücken zwischen benachbarten Polyvinylalkoholketten und von C = C Doppelbindungen nachgewiesen werden. In einer besonderen Ausführungsform wird deshalb die Nachvernetzung in Anwesenheit eines Sauerstoff enthaltenden Gases bei Sauerstoffpartialdrücken von 1 bis 100 mbar, vorzugsweise 2 bis 50 mbar durchgeführt. Dies läßt sich am einfachsten dadurch erreichen, daß man das Abpumpen der Luft aus dem Reaktionsbehälter vor dessen Erhitzen bis zum Erreichen des genannten Sauerstoffpartialdruckes durchführt.

Aus Produktionsgründen wird sich die Nachvernetzung der Polyvinylalkoholschicht unmittelbar an die Vernetzung (Vorvernetzung) anschließen, jedoch ist diese Herstellungsweise nicht zwingend. Zur Herstellung der nachvernetzten Composite Membran kann man vielmehr auch von den im Handel erhältlichen Composite-Membranen mit Polyvinylalkohol-Trennschicht ausgehen, die bereits eine mehr oder weniger lange Lagerzeit aufweisen, und diese der Nachvernetzung unterwerfen.

Die Polyvinylalkohol-Trennschicht der Composite-Membran ist porenfrei und fehlstellenfrei (löcherfrei). Porenfrei bedeutet hier, daß die Schicht keine durchgehenden, örtlich und zeitlich unveränderlichen, die beiden Seiten der Schicht verbindenden Kanäle (Poren) aufweist. Derartige Schichten bzw. Filme werden auch als "dichte" Membranen bezeichnet. Es besteht Klarheit darüber, daß sie ein gewisses freies Volumen aufweisen, dessen Größe und Verteilung von Temperatur, Molekülgröße, Kristallisationsgrad und anderen Einflußgrößen abhängt. Verteilung und Ort des freien Volumens sind nicht feiert und ändern sich dauernd durch die Brown'sche Molekularbewegung. Durch dieses freie Volumen kann ein diffusiver Stofftransport erfolgen. Solche porenfreien Schichten und Filme sind deutlich von den sog. "mikroporösen" Membranen unterschieden, die räumlich und zeitlich fixierte Poren enthalten, mit Porendurchmessern oberhalb von 10 Å, durch die ein konvektiver Transport oder Transport durch die sog. "Porendiffusion" ("Knudsendiffusion") erfolgt und die z.B. für die Ultrafiltration Verwendung finden.

Die poröse Stützschicht:

Die Polyvinylalkohol-Trennschicht besitzt für praktische Zwecke meistens eine zu geringe mechanische Stabilität und wird deshalb in aller Regel auf eine poröse Stützschicht aufgebracht. Die Dicke der porösen Stützschicht ist nicht kritisch, sofern nur eine ausreichende mechanische Festigkeit gewährleistet ist. Vorzugsweise beträgt die Dicke 40-200 $\mu$m, insbesondere 50-100 $\mu$m. Die poröse Stutzschicht weist eine möglichst enge Porengrößenverteilung auf mit einer mittleren Porengröße von 5-100 nm, vorzugsweise 10-50 nm. Hierbei liegt vorzugsweise eine asymmetrische Porenstruktur vor. Der entsprechende "cut-off-value" liegt niedriger als 50 000 Dalton, vorzugsweise niedriger als 20 000 Dalton.

Vorzugsweise werden für die Herstellung der porösen Stützschicht Polymere mit Glasübergangstemperaturen oberhalb von 80°C und einem Molekulargewicht von 5 000 - 200 000, insbesondere 20 000 - 60 000, verwendet. Beispiele für geeignete Polymere sind Polyacrylnitril, Polysulfone, Polyethersulfone, Polyetherimide, Polyvinylidenfluorid, hydrolysiertes Cellulosetriacetat, Polyphenylensulfide, Copolymere von teilfluorierten Polyolefinen und Polyurethane.

Die porösen Stützschichten werden vorzugsweise nach dem Phaseninversionsverfahren hergestellt, es können aber auch poröse Stützschichten verwendet werden, die durch schichtweise Ablagerung von anorganischen Materialien oder auf andere, dem Fachmann bekannte Weise, gebildet werden.

Die Verstärkungsschicht

Zur weiteren Verbesserung der mechanischen Festigkeit, insbesondere der Reißfestigkeit, besitzen die in der Praxis verwendeten Composite-Membranen der Erfindung eine Verstärkungsschicht unterhalb der porösen Stützschicht, wobei die Verstärkungsschicht dem Materietransport durch die Membran keinen nennenswerten Widerstand entgegensetzen sollte. Als Verstärkungsschicht kommen hochporöse flexible Fasergewebe oder Faservliese in Frage. Beispiele für geeignete Fasermaterialien sind Baumwolle, Polyester, Polyamide, Metalle, Polyolefine, fluorierte Polyolefine, Polysulfone, Polyetherimide, Polyphenylensulfide oder Kohlenstoff. Es können jedoch auch poröse Strukturen aus Glas, Keramik, Graphit oder Metallen verwendet werden, z.B. in Form von dünnen Röhrchen. Die Dicke der Verstärkungsschicht ist ebenfalls nicht kritisch; in der Praxis haben sich Dicken von 50-150 $\mu$m, z.B. um 100 $\mu$m, als besonders geeignet erwiesen.

Für die technische Verwendung besteht die Composite-Membran der Erfindung somit aus drei Schichten in folgender Reihenfolge: Verstärkungsschicht - poröse Stützschicht - porenfreie Trennschicht aus vernetztem und nachvernetztem Polyvinylalkohol. In der einfachsten Ausführungsform liegen diese Composite-Membranen als Flachmembranen vor. In einer bevorzugten Ausführungsform ist die Composite-Membran jedoch röhrenförmig, wobei der lichte Durchmesser einige mm beträgt; ansonsten ist der Strukturaufbau der gleiche wie bei der Flachmembran.

In einer speziellen Ausführungsform bezieht sich die Erfindung auf die Wasserabtrennung aus wässrigen Aminlösungen oder aus Lösungen von Amingemischen. In diesen Fallen müssen die Membranen neben den gewünschten Trenneigenschaften, nämlich hohe Selektivität und hoher transmembraner Fluß auch dauerbeständig gegen heiße Aminlösungen sein.

Bei der Entwässerung von Aminlösungen sind hinsichtlich der Trennschicht der Membran keine besonderen Maßnahmen erforderlich, da das Trennschichtmaterial, Polyvinylalkohol durch die Nachvernetzung ohnehin beständig gegen heiße Aminlösungen ist.

Beispiele für aminbeständiges Material für die poröse Stützschicht sind Polysulfon, Polyethersulfone, Polyetherimide, Polyvinylidenfluoride, hydrolysiertes Cellulosetriacetat, Polyphenylensulfide und Copolymere von teilfluorierten Polyolefinen.

Beispiele für geeignetes aminbeständiges Material für die Stützschicht sind hochporöse flexible Gewebe oder Vliese aus Fasern aus z.B. Baumwolle, Metallen, Polyolefinen, fluorierten Polyolefinen, Polysulfonen, Polyetherimiden, Polyphenylensulfiden oder Kohlenstoff, aber auch poröse Strukturen aus Glas, Keramik, Graphit oder Metallen. Beispiele für bevorzugte Materialien sind Kohlefaservliese, Baumwollgewebe, Vliese aus Polyphenylensulfiden und poröse Graphitrohre.

Die Beispiele erläutern die Erfindung.

Beispiel 1

Auf ein Polyestervlies von etwa 100 $\mu$m Dicke als Verstärkungsschicht wird eine Polyacrylnitrillösung in Dimethylformamid aufgetragen und in Wasser gefällt. Die so erhaltene poröse Membran hat eine Dicke von etwa 200 $\mu$m, (einschließlich Verstärkungsschicht), eine asymmetrische Porenstruktur und ein Rückhaltevermögen für Dextranmoleküle mit einem Molekulargewicht von über 20 000. Diese PAN-Membran wurde getrocknet und mit einer 5%igen Lösung von Polyvinylalkohol, die 0,05 Mol Maleinsäure je Mol Polyvinylalkoholmonomer enthielt, bestrichen. Nach Trocknen bei 130°C wurde die so erhaltene Membran in einen Edelstahlbehälter von 2,5 l Inhalt gebracht. Am Boden des Edelstahlbehälters befanden sich 0,1 g festes 1,2-Dibromäthan. Um ein vorzeitiges Verdampfen des Dibromäthans zu vermeiden, wurde der Edelstahlbehälter auf 0°C gekühlt und die in ihm befindliche Luft bis auf einen Restdruck von 20 mbar abgesaugt. Der Edelstahlbehälter wurde anschließend auf 150°C erhitzt und für 5 Stunden bei dieser Temperatur gehalten. Nach dem Abkühlen und Belüften wurde die Membran entnommen und in einem Pervaporationsversuch mit einem Essigsäure-Wassergemisch getestet. Der Wassergehalt der Zulaufmischung wurde dabei zwischen 98% und 10% variiert. Das Permeat bestand bei allen Zulaufkonzentrationen zu mehr als 99,8% aus Wasser, die Membran erwies sich als dauernd stabil bei Temperaturen bis 100°C. Bei 80°C betrug der Permeatfluß 2,6 kg/m$^2 \cdot$h bei einer Wasserkonzentration von 60% im Zulauf.

Unter gleichen Testbedingungen verloren nach dem Stand der Technik bekannte Polyvinylalkohol-Composite-Membranen nach kurzer Zeit ihre Selektivität und konnten für eine Trennung nicht mehr benutzt werden.

Beispiel 2

Als Ausgangsmaterial diente eine handelsübliche Composite-Membran (GFT, Homburg) nach dem Stand der Technik (EP-B-0 096 339), die auf einem Polyestervlies als Verstärkungsschicht eine poröse Stützschicht aus Polyacrylnitril und hierauf eine Trennschicht aus vernetztem Polyvinylalkohol enthält. Diese Membran wurde einer Nachvernetzung, wie in Beispiel 1 beschrieben, unterworfen, wobei zur Nachvernetzung ein Gemisch aus 0,05 g 1,2-Dibromäthan und 0,05 g 1,2-Dichloräthan verwendet wurde. Die so erhaltene nachvernetzte Composite-Membran sowie die Ausgangsmembran wurden dann im Pervaporationsversuch auf ihre Eignung zur Entwässerung eines Ethanol-Wassergemisches untersucht. Die Ergebnisse sind in Tabelle 1 zusammengestellt.

Tabelle 1

| Zulaufkonzentration Gew% $H_2O$ | Permeatkonzentration nachvernetzte Membran Gew% $H_2O$ | Permeatkonzentration Ausgangs-Membran Gew% $H_2O$ |
|---|---|---|
| 90 | 99,8 | 90 |
| 80 | 99,9 | 82 |
| 70 | 99,8 | 80 |
| 60 | 99,9 | 80 |
| 50 | 99,9 | 80 |
| 40 | 99,8 | 85 |
| 30 | 99,9 | 92 |
| 20 | 99,9 | 95 |
| 10 | 99,9 | 96 |
| 5 | 99,8 | 95 |
| 2 | 99,0 | 80 |

Tabelle 1 zeigt, daß bei der erfindungsgemäß nachvernetzten Membran bei Zulaufkonzentrationen oberhalb von 5% Wasser im Ethanol Wasser-Gemisch und bis zu 90% Wassergehalt im Zulauf das Permeat praktisch ausschließlich aus Wasser besteht. Andererseits besitzt bei einer Wasserkonzentration von 90% im Zulauf das Permeat bei der Vergleichsmembran die gleiche Zusammensetzung, d.h. es findet überhaupt keine Trennung (Entwässerung) statt. Tabelle 1 zeigt weiterhin, daß auch bei geringen Wasserkonzentrationen im Zulauf die Vergleichsmembran der nachvernetzten Membran der Erfindung unterlegen ist. Die Permeatflüsse waren bei 80°C Betriebstemperatur für beide Membranen etwa gleich groß.

Beispiel 3

Eine Ultrafiltrationsmembran aus Polyacrylnitril mit asymmetrischer Porenstruktur (poröse Stützschicht) auf einem Polyestervlies (Verstärkungsschicht) wurde mit einer Lösung aus 6% Polyvinylalkohol in Wasser, die je Mol Polyvinylalkoholmonomereinheit 0,05 Mol Maleinsäure und 0,5 Mol Formaldehyd enthielt, bestrichen. Nach dem Trocknen bei 140°C wurde die Membran in einen Edelstahlbehälter gebracht, der verschlossen und bis auf einen Restdruck von 20 mbar ausgepumpt wurde. Anschließend wurde Stickstoff eingelassen, der durch konzentrierte wässrige Salzsäure geleitet worden und so an Salzsäure gesättigt war bis in dem Edelstahlbehälter ein Druck von 500 mbar herrschte. Anschließend wurde der Behälter während 4 h auf 180°C erhitzt. Nach dem Abkühlen und Belüften wurde die Membran in einem Pervaporationsversuch mit einer Zulaufmischung aus 98 Gew% Essigsäurebutylester und 2 Gew% Wasser getestet. Bis zu einer Endkonzentration von 99.9 Gew% Essigsäurebutylester wurde im Permeat nur Wasser gefunden. Bei einer Zulaufkonzentration von 99 Gew% Ester und einer Temperatur von 90°C lag der Permeatfluß mit 145 g/m$^2$.h deutlich höher als der unter gleichen Bedingungen gemessene Fluß für die in Beispiel 2 beschriebene Vergleichsmembran (100 g/m$^2$.h), bei der im Permeat ein Anteil von 35 Gew% Essigsäurebutylester gefunden wurde.

Beispiel 4

Eine Ultrafiltrationsmembran aus Polyetherimid mit asymmetrischer Porenstruktur (Stützschicht) wurde gemäß Beispiel 3 mit einer Polyvinylalkohollösung bestrichen und getrocknet. Die Nachvernetzung erfolgte ebenfalls wie in Beispiel 3, nur wurde der Stickstoff durch eine wässrige Lösung geleitet, die aus gleichen Teilen konzentrierter Salzsäure und konzentrierter Bromwasserstoffsäure bestand. In einem Pervaporationstest wurde eine stöchiometrische Mischung aus Essigsäure und Ethanol, der 2 g/l Schwefelsäure zugesetzt waren, im Kreislauf über die Membran geführt. Bei einer Temperatur von 85°C wurde nur Wasser im Permeat gefunden, nach 6 h waren 98% der Essigsäure und des Ethanols zu Essigsäureethylester umgesetzt.

Beispiel 5

Die Composite-Membran von Beispiel 3 wurde einem Pervaporationsversuch unterworfen, wobei als Zulauf ein Pyridin-Wassergemisch mit abnehmendem Wassergehalt (von 60 auf 1 Gew%) diente. Bei allen Zulaufkonzentrationen wurde nur Wasser im Permeat gefunden. Die Membran erwies sich auch bei Temperaturen von 100°C als stabil.

Die gleiche Membran wurde mit einem Zulaufgemisch getestet, das aus 82,5% Essigsäure, 15% Monochloressigsäure und 2,5% Wasser bestand. In einem Versuch von 500 h Dauer bei einer Temperatur von 95°C erwies sich die Membran als stabil und veränderte ihre Eigenschaften nicht.

Beispiel 6

Auf einem Vlies aus Kohlefasern (Verstärkungsschicht) wurde eine Membran aus Cellusosetriacetat nach dem Phaseninversionsverfahren (poröse Stützschicht) hergestellt. Anschließend wurde diese Membran 7 Tage lang in einer Ammoniaklösung bei 50°C gelagert, bis das Cellusosetriacetat vollständig zu Cellulose hydrolysiert war. Nach gründlichem Waschen wurde auf die so erhaltene poröse Membran gemäß Beispiel 3 eine vernetzte und nachvernetzte Polyvinylalkohol-Trennschicht aufgebracht.

Die erhaltene Composite-Membran wurde einem Pervaporationsversuch mit einem Ethanol-Wassergemisch unterworfen, daß mit Salzsäure gesättigt war. Die bei Wassergehalten der Zulaufmischung von 50 bis 2 Gew% erhalten Ergebnisse sind ähnlich gut wie in Tabelle 1, d.h. man findet über den gesamten Wasserkonzentrationsbereich praktisch nur Wasser im Permeat.

Beispiel 7

Eine Ultrafiltrationsmembran mit asymmetrischer Porenstruktur aus einem Polyethersulfon wurde mit einer Lösung von 7% Polyvinylalkohol in Wasser, dem je Mol Polyvinylalkoholmonomereinheit 0,05 Mol

9

Glutardialdehyd zugesetzt waren, bestrichen.

Nach dem Trocken bei 120°C wurde diese Membran in einen Edelstahlbehälter gebracht, der in einer Schale am Boden 2 g halbkonzentrierte Schwefelsäure enthielt. Der Behälter wurde verschlossen, die Luft bis auf einen Rest von 400 mbar abgepumpt und der Behälter 4 h auf 140°C erhitzt. Die so erhaltene nachvernetzte Membran wurde in einem Pervaporationsversuch mit Glykoldiäthyläther, der 10 Gew% Wasser enthielt, getestet. Bei 95°C fanden sich im Permeat weniger als 0,5 Glykoläther.

Beispiel 8

Die Composite-Membran von Beispiel 3 wurde einem Pervaporationsversuch unterworfen, wobei als Zulauf ein dampfförmiges Gemisch aus Isopropanol und Wasser bei 95°C und Gleichgewichtsdruck diente. Bei Isopropanolkonzentrationen von 70 bis 99 Gew% im Zulauf wurden im Permeat weniger als 0,2 Gew% Isopropanol gefunden.

Beispiel 9

Es wurde eine nachvernetzte Composite-Membran gemäß Beispiel 7 hergestellt, wobei jedoch die Beschichtungslösung neben Polyvinylalkohol und Glutardialdehyd noch 10 Gew% Glycerin enthielt Die Nachvernetzung erfolgte wie in Beispiel 7. Die fertige Composite-Membran wurde einem Pervaporationsversuch unterworfen, wobei als Zulaufgemisch 40-prozentige wässrige Zitronensäure verwendet wurde. Bei einer Temperatur von 85°C wurde diese Lösung auf einen Zitronensäuregehalt von 65% aufkonzentriert; das Permeat enthielt ausschließlich Wasser.

Beispiel 10

Die Membran von Beispiel 6 wurde in einem Pervaporationsversuch mit einer Lösung aus 70 Gew% Ethylamin und 30 Gew% Wasser getestet. Bei einer Zulauftemperatur von 85°C wurde das Ethylamin bis auf 95 Gew% aufkonzentriert, das Permeat enthielt 85 Gew% Wasser und 15% Ethylamin. Der Permeatfluß wurde mit 750 g/m$^2$.h bestimmt. Die Membran erwies sich als dauerstabil.

Beispiel 11

Durch Phaseninversionsfällung wurde auf einem Vlies aus Kohlefasern eine poröse Membran aus Polysulfon mit asymmetrischer Porenstruktur hergestellt, der mittlere Porendurchmesser an der Oberfläche betrug 35 nm. Nach dem Trocknen wurde diese Membran mit einer Polyvinylalkohollösung entsprechend Beispiel 3 beschichtet und getrocknet. Diese trockene Membran wurde in einen Edelstahlbehälter gebracht, der in einem Gefäß am Boden 3 g halbkonzentrierte Schwefelsäure enthielt. Der Behälter wurde verschlossen, die Luft bis auf eine Restdruck von 50 mbar abgepumpt und der Behälter wurde 6 h auf 140°C erhitzt. Die so erhaltene Membran wurde in einem Pervaporationsversuch mit einem Pyridin-Wassergemisch bei 95°C getestet, dessen Wassergehalt während des Versuches von 60% auf 1% abnahm. Bei allen Zulaufkonzentrationen wurde im Permeat nur Wasser gefunden.

Beispiel 12

Eine Polysulfonmembran wurde entsprechend Beispiel 11 hergestellt, als Unterlage diente ein Vlies aus Polyphylensulfid-Fasern. Die getrocknete Porenmembran wurde mit einer Lösung von 7% Polyvinylalkohol in Wasser, der je mol Polyvinylalkohol-Monomereinheit 0,05 mol Glutardialdehyd enthielt, beschichtet. Die Nachbehandlung erfolgte wie in Beispiel 11 beschrieben. In einem Pervaporationsversuch erwies sich die Membran bei 100°C als stabil gegen eine Mischung von Dimethylamin und Wasser, die Wasserkonzentration änderte sich von 30% auf 5%, das Permeat enthielt in Mittel 5% Amin.

Beispiel 13

Aus einem Polyethersulfon wurde entsprechend Beispiel 11 eine asymetrische Porenmembran hergestellt, als Unterlage diente ein Gewebe aus Poyltetrafluorethylen. Die getrocknete Membran wurde mit einer Polyvinylalkohol-Lösung entsprechend Beispiel 3 bestrichen, die Lösung enthielt zusätzlich 0,05 mol Malonsäure je mol Polyvinylalkohol-Monomereinheit. In einem evakuierten Edelstahlbehälter, in dem sich 0,1 g 1,2-Dibromethan befanden, wurde die Membran durch Erhitzen auf 160°C über 6 h nachbehandelt. In einem Pervaporationsversuch wurde die Membran mit einer wässrigen Lösung von Ethylidendiamin getestet, sie erwies sich bei Wasserkonzentrationen zwischen 20 und 5% als stabil bei Temperaturen von 100°C.

**Patentansprüche**

1. Composite-Membran zur Abtrennung von Wasser aus organische Komponenten enthaltenden fluiden Gemischen mittels Pervaporation oder Dampfpermeation, mit einer Trennschicht aus vernetztem Polyvinylalkohol, dadurch gekennzeichnet, daß die vernetzte Polyvinylalkohol-Trennschicht in einem separaten Verfahrensschritt einer Nachvernetzung durch Einwirkung von Säuren, die über die Dampfphase auf die Polyvinylalkoholschicht einwirken, unterworfen worden ist.

2. Composite-Membran nach Anspruch 1, dadurch gekennzeichnet, daß die Säuren ausgewählt sind aus Halogenwasserstoffsäuren, schwefliger Säure, Schwefelsäure, salpetriger Säure, Salpetersäure, Essigsäure oder Gemischen hiervon.

3. Composite-Membran nach Anspruch 1, dadurch gekennzeichnet, daß die Säuren in situ aus säureabspaltenden Verbindungen erhalten worden sind.

4. Composite-Membran nach Anspruch 3, dadurch gekennzeichnet, daß es sich bei den säureabspaltenden Verbindungen um Halogenkohlenwasserstoffe, vorzugsweise - $\alpha$, $\Omega$ -Dihalogenalkane handelt.

5. Composite-Membran nach Anspruch 3, dadurch gekennzeichnet, daß es sich bei den säureabspaltenden Verbindungen um Salze, vorzugsweise Ammoniumsalze handelt.

6. Composite-Membran nach einem der Ansprüche 1 bis 5, dadurch gekennzeichnet, daß die Nachvernetzung bei Temperaturen von 100 - 230°C, vorzugsweise 130 - 180°C, durchgeführt worden ist.

7. Composite-Membran nach einem der Ansprüche 1 bis 6, dadurch gekennzeichnet, daß die Nachvernetzung in Anwesenheit eines Sauerstoff enthaltenden Gases bei Sauerstoffpartialdrucken von 1 - 100 mbar, vorzugsweise 2 - 50 mbar, durchgeführt worden ist.

8. Composite-Membran nach einem der Ansprüche 1 bis 7, dadurch gekennzeichnet, daß die der Nachvernetzung unterworfene Polyvinylalkoholschicht durch Vorvernetzen mittels Verethern, Verestern und/oder Acetalisieren erhalten worden ist.

9. Composite-Membran nach einem der Ansprüche 1 bis 8, dadurch gekennzeichnet, daß der Polyvinylalkohol der Trennschicht einen Hydrolysegrad von 50 bis 100%, vorzugsweise 98 bis 100% aufweist.

10. Composite-Membran nach einem der Ansprüche 1 bis 9, dadurch gekennzeichnet, daß der Polyvinylalkohol der Trennschicht ein Molekulargewicht von 20 000 bis 200 000, vorzugsweise 100 000 bis 150 000 besitzt.

11. Composite-Membran nach einem der Ansprüche 1 bis 10, dadurch gekennzeichnet, daß die Trennschicht auf einer porösen Stützschicht aufliegt, die aus Polyacrylnitril, Polysulfon, Polyethersulfon, Polyetherimid, Polyurethan oder hydrolysiertem Celluloseacetat besteht.

12. Composite-Membran nach Anspruch 11, dadurch gekennzeichnet, daß die poröse Stützschicht eine asymmetrische Porenstruktur mit einer mittleren Porengröße von 5 bis 100 nm, vorzugsweise 10 bis 50 nm aufweist.

13. Composite-Membran nach Anspruch 11 oder 12, dadurch gekennzeichnet, daß die poröse Stutzschicht auf einer Verstärkungsschicht aufliegt, die ein Gewebe oder Vlies aus Polyester-, Polyethylen-, Polypropylen, PTFE-, Baumwoll-, Kohlenstoff-, Glas- oder Metallfaser darstellt.

14. Composite-Membran nach einem der Ansprüche 1 bis 10, dadurch gekennzeichnet, daß die Membran eine poröse Stützschicht und eine Verstärkungsschicht aus aminbeständigem Material aufweist.

**15.** Composite-Membran nach Anspruch 14, dadurch gekennzeichnet, daß die poröse Stützschicht aus Polysulfonen, Polyethersulfonen, Polyetherimiden, Polvvinylidenfluoriden, hydrolysiertem Cellulosetriacetat, Polyphenylensulfiden oder Copolymeren von teilfluorierten Polyolefinen besteht.

**16.** Composite-Membran nach Anspruch 14 oder 15, dadurch gekennzeichnet daß die Verstärkungsschicht ein hochporöses flexibles Gewebe oder Vlies aus Fasern aus Baumwolle, Metallen, Polyolefinen, fluorierten Polyolefinen, Polysulfonen, Polyetherimiden, Polyphenylersulfiden oder Kohlenstoff, oder eine poröse Struktur aus Glas, Keramik, Graphit oder Metall ist.

**17.** Verfahren zur Abtrennung von Wasser aus organische Komponenten enthaltenden fluiden Gemischen mittels Pervaporation oder Dampfpermeation, wobei das zur entwässernde fluide Gemisch mit einer Seite einer Composite-Membran in Kontakt gebracht wird, während das chemische Potential des Wassers auf der anderen Seite der Membran auf einem Wert gehalten wird, der niedriger ist als der des chemischen Potentials des Wassers der einen Seite, dadurch gekennzeichnet, daß man das Verfahren mit einer Composite-Membran nach einem der Ansprüche 1 bis 13 durchführt.

**18.** Verfahren zur Entwässerung wasserhaltiger Aminlösungen, mittels Pervaporation oder Dampfpermeation, wobei das zur entwässernde fluide Gemisch mit einer Seite einer Composite-Membran in Kontakt gebracht wird, während das chemische Potential des Wassers auf der anderen Seite der Membran auf einem Wert gehalten wird, der niedriger ist als der des chemischen Potentials des Wassers der einen Seite, dadurch gekennzeichnet, daß man das Verfahren mit einer Composite-Membran gemäß einem der Ansprüche 14 bis 16 durchführt.

**19.** Verfahren nach Anspruch 17 oder 18, dadurch gekennzeichnet, daß man das zu entwässernde fluide Gemisch als Flüssigkeitsgemisch einsetzt.

**20.** Verfahren nach Anspruch 17 oder 18, dadurch gekennzeichnet, daß man das zu entwässernde fluide Gemisch dampfförmig, vorzugsweise als gesättigten Dampf, einsetzt.

## Claims

**1.** Composite membrane for separating water from fluid mixtures containing organic components by means of pervaporation or vapor-permeation comprising a separating layer of cross-linked polyvinyl alcohol, **characterized in** that the cross-linked polyvinyl alcohol separating layer has been subjected in a separate process step to a post-cross-linking by treatment with acids, which act in the vapor phase on said polyvinyl alcohol layer.

**2.** Composite membrane of claim 1, characterized in that the acids are selected from hydrohalic acids, sulfurous acid, sulfuric acid, nitrous acid, nitric acid, acetic acid or mixtures thereof.

**3.** Composite membrane of claim 1, characterized in that the acids are obtained *in situ* by compounds which release an acid.

**4.** Composite membrane of claim 3, characterized in that the acid-releasing compounds are hydrocarbon halides, in particular $\alpha, \omega$-dihalogen alkanes.

**5.** Composite membrane of claim 3, characterized in that the acid-releasing compounds are salts, in particular ammonium salts.

**6.** Composite membrane of any of claims 1 to 5, characterized in that the post-cross-linking is carried out at temperatures in the range of 100 °C - 230 °C, in particular in the ran ge of 130 °C - 180 °C.

**7.** Composite membrane according to any of the claims 1 to 6, characterized in that the post-cross-linking is carried out in the presence of an oxygen-containing gas at an oxygen partial pressure in the range of 1 - 100 mbar, in particular in the range of 2 - 50 mbar.

**8.** Composite membrane of any of claims 1 to 7, characterized in that the polyvinyl alcohol layer subjected to post-cross-linking has been obtained by pre-crosslinking by means of etherification, esterification and/or acetalization.

9. Composite membrane of any of claims 1 to 8, characterized in that the polyvinyl alcohol of the separating layer is hydrolyzed to an amount in the range of 50 - 100%, in particular in the range of 98 - 100%.

10. Composite membrane of any of claims 1 to 9, characterized in that the polyvinyl alcohol of the separating layer has a molecular weight in the range of 20,000 - 200,000, in particular in the range of 100,000 - 150,000.

11. Composite membrane of any of claims 1 to 10, characterized in that the separating layer lies on a porous backing layer consisting of polyacrylonitrile, polysulfone, polyether sulfone, polyether imide, polyurethane or hydrolyzed cellulose acetate.

12. Composite membrane of claim 11, characterized in that the porous backing layer comprises an asymmetrical pore structure with an average pore size in the range of 5 - 100 nm, in particular in the range of 10 - 50 nm.

13. Composite membrane of claim 11 or 12, characterized in that the porous backing layer lies on a reinforcing layer, said reinforcing layer being a fabric or fleece of fibers selected from polyester, polyethylene, polypropylene, PTFE, cotton, carbon, glass or metal.

14. Composite membrane of any of claims 1 to 10, characterized in that the membrane comprises a porous backing layer and a reinforcing layer of amine-resistant material.

15. Composite membrane of claim 14, characterized in that the porous backing layer consists of polysulfones, polyether sulfones, polyether imides, polyvinylidene fluorides, hydrolyzed cellulose triacetate, polyphenylene sulfides or copolymers of partially fluorinated polyolefins.

16. Composite membrane of claim 14 or 15, characterized in that the reinforcing layer is a highly porous flexible fabric or fleece, comprising fibers of cotton, metals, polyolefins, fluorinated polyolefins, polysulfones, polyether imides, polyphenylene sulfides or carbon, or the reinforcing layer is a porous structure of glass, ceramic, graphite or metal.

17. Process for separating water from fluid mixtures containing organic components by means of pervaporation or vapor-permeation, where the fluid mixture to be dehydrated is contacted to a first side of a composite membrane, while the chemical potential of water on a second side of the membrane is maintained at a value lower than the chemical potential of water on said first side, characterized in that the process is carried out with a composite membrane of one of the claims 1 to 13.

18. Process for dehydrating water-containing amine solutions by means of pervaporation or vapor-permeation, where the fluid mixture to be dehydrated is contacted to a first side of a composite membrane, while the chemical potential of water on a second side of the membrane is maintained at a value lower than the chemical potential of water on said first side, characterized in that the process is carried out with a composite membrane of one of the claims 14 to 16.

19. Process of claim 17 or 18, characterized in that the mixture to be dehydrated is a liquid mixture.

20. Process of claim 17 or 18, characterized in that the fluid mixture to be dehydrated is in vapor form, in particular a saturated vapor.

**Revendications**

1. Membrane composite pour extraire de l'eau de mélanges fluides contenant des composants organiques au moyen de pervaporation ou de perméation à la vapeur, comportant une couche de séparation en alcool polyvinylique réticulé, caractérisée en ce que la couche de séparation en alcool polyvinylique réticulé a été soumise dans une phase de procédé distincte à une postréticulation par l'action d'acides qui agissent en phase vapeur sur la couche en alcool polyvinylique.

EP 0 436 128 B1

2. Membrane composite selon la revendication 1, caractérisée en ce que les acides sont choisis parmi des haloacides, de l'acide sulfureux, de l'acide sulfurique, de l'acide nitreux, de l'acide nitrique, de l'acide acétique ou de mélanges de ces acides.

3. Membrane composite selon la revendication 1, caractérisée en ce que les acides ont été obtenus in situ à partir de composés clivant des acides.

4. Membrane composite selon la revendication 3, caractérisée en ce que les composés clivant des acides sont des hydrocarbures halogénés, de préférence des $\alpha$, $\Omega$, -dihalogènoalcanes.

5. Membrane composite selon la revendication 3, caractérisée en ce que les composés clivant des acides sont des sels, de préférence des sels d'ammonium.

6. Membrane composite selon l'une quelconque des revendications 1 à 5, caractérisée en ce que la postréticulation a été effectuée à des températures de 100 à 230 °C, de préférence de 130 à 180 °C.

7. Membrane composite selon l'une quelconque des revendications 1 à 6, caractérisée en ce que la postréticulation a été effectuée en présence d'un gaz contenant de l'oxygène à des pressions partielles d'oxygène de 1 à 100 mbar, de préférence de 2 à 50 mbar.

8. Membrane composite selon l'une quelconque des revendications 1 à 7, caractérisée en ce que la couche en alcool polyvinylique soumise à la postréticulation a été préalablement réticulée au moyen d'éthérification, d'estérification et/ou d'acétalisation.

9. Membrane composite selon l'une quelconque des revendications 1 à 8, caractérisée en ce que l'alcool polyvinylique de la couche de séparation présente un degré d'hydrolyse de 50 à 100 %, de préférence de 98 à 100 %.

10. Membrane composite selon l'une quelconque des revendications 1 à 9, caractérisée en ce que l'alcool polyvinylique de la couche de séparation a un poids moléculaire de 20.000 à 200.000, de préférence de 100.000 à 150.000.

11. Membrane composite selon l'une quelconque des revendications 1 à 10, caractérisée en ce que la couche de séparation repose sur une couche de support poreuse qui est en polyacrylonitrile, en polysulfone, en polyéthersulfone, en polyétherimide, en polyuréthane ou en acétate de cellulose hydrolisé.

12. Membrane composite selon la revendication 11, caractérisée en ce que la couche de support poreuse présente une structure poreuse asymétrique avec une grosseur moyenne de pores de 5 à 100 nm, de préférence 10 à 50 nm.

13. Membrane composite selon l'une des revendications 11 ou 12, caractérisée en ce que la couche de support poreuse repose sur une couche de renforcement qui est constituée d'une texture ou d'un non-tissé en fibres de polyester, de polyéthylène, de polypropylène, de PTFE, de coton, de carbone, de verre ou de métal.

14. Membrane composite selon l'une quelconque des revendications 1 à 10, caractérisée en ce que la membrane comporte une couche de support poreuse et une couche de renforcement en matière résistant aux amines.

15. Membrane composite selon la revendication 14, caractérisée en ce que la couche de support poreuse est constituée de polysulfones, de polyéthersulfones, de polyétherimides, de polyfluorures de vinylidène, de triacétate de cellulose hydrolisé, de polysulfures de phénylène et de copolymères de polyoléfines partiellement fluorés.

16. Membrane composite selon l'une des revendications 14 ou 15, caractérisée en ce que la couche de renforcement est une texture ou un non-tissé flexible très poreux en fibres de coton, de métaux, de polyoléfines, de polyoléfines fluorées, de polysulfones, de polyétherimides, de poluysulfures de

14

phénylène ou de carbone, ou une structure poreuse en verre, céramique, graphite ou métal.

17. Procédé pour extraire de l'eau de mélanges fluides contenant des composants organiques au moyen de pervaporation ou de perméation à la vapeur, le mélange fluide à déshydrater étant mis en contact avec un côté d'une membrane composite, tandis que de l'autre côté de la membrane, le potentiel chimique de l'eau est maintenu à une valeur qui est inférieure au potentiel chimique de l'eau du premier côté, caractérisé en ce que le procédé est réalisé avec une membrane composite selon l'une quelconque des revendications 1 à 13.

18. Procédé de déshydratation de solutions aminées aqueuses au moyen de pervaporation, selon lequel le mélange fluide à déshydrater est mis en contact avec un côté d'une membrane composite, tandis que de l'autre côté de la membrane le potentiel chimique de l'eau est maintenu à une valeur qui est inférieure au potentiel chimique de l'eau du premier côté, caractérisé en ce que le procédé est réalisé avec une membrane composite selon l'une des revendications 14 à 16.

19. Procédé selon l'une des revendications 17 ou 18, caractérisé en ce que le mélange fluide à déshydrater est introduit en tant que mélange liquide.

20. Procédé selon l'une des revendications 17 ou 18, caractérisé en ce que le mélange fluide à déshydrater est introduit à l'état vapeur, de préférence en tant que vapeur saturée.